# EUROPÄISCHE PATENTSCHRIFT

(11) **EP 3 271 612 B1**
(45) Veröffentlichungstag und Bekanntmachung des Hinweises auf die Patenterteilung: **15.01.2020**
(21) Anmeldenummer: 16710196.3
(22) Anmeldetag: 16.03.2016
(51) Int. Cl.: F16G 13/16

(54) **ENERGIEFÜHRUNGSKETTE MIT HALTER FÜR EINE EXTERNE LEITUNG, AUFNAHMEELEMENT UND ENTSPRECHENDE SEITENLASCHE**
ENERGY CHAIN COMPRISING A HOLDER FOR AN EXTERNAL CABLE, RECEIVING ELEMENT AND CORRESPONDING SIDE PLATE
CHAÎNE DE TRANSPORT D'ÉNERGIE POURVU D'UN SUPPORT POUR UN CONDUIT EXTERNE, ÉLÉMENT DE LOGEMENT ET BRIDE LATÉRALE CORRESPONDANTE

(30) Priorität: 16.03.2015 DE 202015101341 U
(43) Veröffentlichungstag der Anmeldung: 24.01.2018
(73) Patentinhaber: Igus GmbH, 51147 Köln (DE)
(72) Erfinder: STRACK, Stefan, 53639 Königswinter (DE)
(74) Vertreter: Lippert Stachow Patentanwälte Rechtsanwälte
(86) Internationale Anmeldenummer: PCT/EP2016/055722
(87) Internationale Veröffentlichungsnummer: WO 2016/146706

(56) Entgegenhaltungen:
- DE-A1- 2 437 742
- DE-A1-102010 003 282
- JP-A- 2001 012 560
- US-A- 5 829 243

## Beschreibung

Die Erfindung betrifft eine Energieführungskette zum Führen von Leitungen wie Kabeln, Schläuchen und dergleichen mit einer Mehrzahl von gelenkig miteinander verbundenen Kettengliedern, die durch zueinander parallele Seitenlaschen und diese verbindende Querstege gebildet werden. Insbesondere betrifft die Erfindung eine solche Energieführungskette, bei der neben den in Längsrichtung innerhalb der aus Seitenlaschen und Querstegen gebildeten Kettenglieder verlaufenden Leitungen auch außerhalb der Kettenglieder mindestens eine weitere Leitung vorhanden ist und geführt wird.

Solche Energieführungsketten werden beispielsweise in Anlagen verwendet, bei denen ein bewegliches Anlagenteil von einem feststehenden Bereich aus mit Energie und/oder fluiden Materialien beispielsweise zum Verbrauch oder zur fluidmechanischen Steuerung versorgt werden muss. Dies geschieht in der Regel durch eine Mehrzahl von parallel verlaufenden Leitungen, die in dem durch die Kettenglieder gebildeten Längskanal verlegt sind. Wartung, Reparatur und/oder Austausch einer solchen Leitung erfordert meist die Öffnung der Kettenglieder mit einem erheblichen Aufwand. Wenn bei der Einrichtung der Anlage abzusehen ist, dass bei einer bestimmten Leitung solche Arbeiten häufiger auftreten können, oder wenn bei Veränderungen der Anlage eine Leitung hinzukommt, kann diese an der Außenseite der Kette angebracht werden und ist so leichter zugänglich.

Eine Kette dieser Art ist in DE 10 2010 003 282 A1 beschrieben. Sie umfasst mehrere in Längsrichtung der Kette aufeinanderfolgende Halteelemente, mittels derer zusätzlich mindestens eine Leitung außerhalb der Kette befestigbar ist. Diese Halteelemente sind bevorzugt drehbar angebracht, wobei ihre Drehachse mit jeweils einer Schwenkachse zwischen benachbarten Kettengliedern zusammenfällt, und sie sind vorzugsweise mit einer bevorzugt lösbaren Steckverbindung an der Energieführungskette befestigbar. Dabei können auch vorhandene Halteelemente gegen andere ausgetauscht werden.

Durch die drehbare Befestigung der Halteelemente in der Schwenkachse wird bei einer solchen Kette durch die beim Verfahren einwirkenden Kräfte der gegenüber dem mittleren Bereich dünnere Überlappungsbereich der Seitenlasche bzw. der zur Aufnahme des Halteelementes mit einer Bohrung versehenen Schwenkbolzen stark belastet, so dass es zu Ermüdung oder Bruch kommen kann. Des Weiteren kann es schwierig sein, das Halteelement in Richtung der Schwenkachse herauszuziehen, wenn die Energieführungskette in beengten räumlichen Verhältnissen verwendet wird.

Bekannt ist auch ein sogenannter "Rastclip" der Firma igus GmbH, Köln (Deutschland), bei dem auf einem Grundkörper in Form einer Seitenlasche eine Leitung mittels eines eine Schlaufe bildenden Rastbandes befestigt werden kann.

Aus der Offenlegungsschrift JP 2001-012560 A ist ein Verbindungsbauteil in Art eines Clipverbinders bekannt, das zum Bündeln mehrerer Energieführungsketten dient. Es befestigt zwei nebeneinander angeordnete Energieführungsketten parallel aneinander durch Rastverbindungen.

Von diesem Stand der Technik ausgehend stellt sich die Erfindung die Aufgabe, eine Energieführungskette anzugeben, bei der es möglich ist, eine außerhalb der Kettenglieder geführte Leitung auf einfache Weise anzubringen und wieder abzunehmen, wobei die Stabilität der Kette erhalten bleiben soll.

Diese Aufgabe wird durch eine Energieführungskette nach dem Anspruch 1 und unabhängig hiervon durch eine Seitenlasche für eine Energieführungskette nach Anspruch 9 gelöst.

Die erfindungsgemäße Energieführungskette weist eine Mehrzahl gelenkig miteinander verbundener Kettenglieder auf, welche zueinander parallele Seitenlaschen aufweisen, die gegebenenfalls durch Querstege verbunden sind, wobei benachbarte Kettenglieder jeweils um eine quer zur Längsrichtung der Kette verlaufende Schwenkachse gegeneinander schwenkbar sind. Dabei verläuft die Mehrzahl der von der Kette geführten Leitungen innerhalb der Kettenglieder, während mindestens eine weitere Leitung außerhalb der Kettenglieder angeordnet ist und von Halteelementen gestützt ist, die an der Energieführungskette vorgesehen sind.

Erfindungsgemäß sind auf mindestens einer Seite der Energieführungskette auf den Außenflächen an zumindest einigen der Seitenlaschen, im Bereich zwischen jeweils zwei Schwenkachsen, Aufnahmen angebracht.

Die erfindungsgemäßen Aufnahmen sind so ausgeführt, dass in jede Aufnahme jeweils ein Halteelement für die mindestens eine weitere Leitung längs einer im Wesentlichen parallel bzw. technisch parallel zur Seitenlasche verlaufenden Ebene eingeschoben werden kann. Ferner ist dabei jede Aufnahme jeweils in einer Richtung, welche quer zur Längsrichtung und quer zu den Schwenkachsen verläuft, mittig an der jeweiligen Seitenlasche vorgesehen.

Die Lokaladverbien innerhalb und außerhalb beziehen sich vorliegend auf den im Querschnitt betrachteten Aufnahmeraum der Energieführungskette selbst, welcher durch die Seitenlaschen und die Querstege begrenzt ist. Dabei sind bei einer sogenannten halbstegigen Energieführungskette nur an jedem zweiten Kettenglied Querstege vorgesehen, während in einer sogenannten vollstegigen Energieführungskette jedes Glied jeweils durch Seitenlaschen und Querstege gebildet wird.

Auf die Bauweise der Kettenglieder als solche kommt es bei der Erfindung jedoch nicht an. Bei der erfindungsgemäßen Energieführungskette können beispielsweise identische Kettenglieder miteinander verbunden sein, die sogenannte gekröpfte Seitenlaschen aufweisen, oder auch Kettenglieder, die abwechselnd Innen- und Außenlaschen umfassen. Im letzteren Fall kann es ausreichend sein, die Aufnahmen nur an den Außenlaschen oder nur an den Innenlaschen anzubringen.

Die Kettenglieder können mit Zusatzeinrichtungen versehen sein, wie sie aus dem Stand der Technik bekannt sind, beispielsweise Trennstegen, welche den Innenraum der Kettenglieder unterteilen, Einrichtungen, welche das Öffnen der Kettenglieder erleichtern und Mittel, welche das Verfahren des Obertrums auf dem Untertrum der Kette erleichtern, wie Rollen oder Gleitelemente.

Die mindestens eine außerhalb der Kettenglieder angeordnete Leitung kann auf jeder der beiden Außenseiten der Energieführungskette angebracht sein. Es ist auch möglich, auf beiden Außenseiten Leitungen anzubringen. Ebenso können auf einer Seite auch zwei oder einige Leitungen verlaufen, die von gemeinsamen Halteelementen gestützt werden. Im Allgemeinen ist die Zahl der innerhalb der Kettenglieder angeordneten Leitungen größer als jene der an den Außenseiten verlaufenden.

Die von der erfindungsgemäßen Energieführungskette geführten Leitungen können zum Beispiel Energie, beispielsweise Elektrizität, Lichtstrahlung oder innere Energie komprimierter Fluide wie Druckluft oder Hydraulikflüssigkeiten, oder Materialien zum Verbrauch, wie Erdgas, Mineralöl, chemische Reagenzien, zwischen zwei relativ zueinander bewegbaren Anschlussstellen transportieren. Je nach diesem Verwendungszweck umfassen die Leitungen beispielsweise Leiter mit Metalldrähten, Schläuche oder flexible Rohre aus geeigneten Materialien.

Die Halteelemente können beispielsweise einen Fußabschnitt aufweisen, der in die Aufnahme eingeschoben werden kann, und einen weiteren Abschnitt mit einer Öffnung, durch die die Leitung geführt werden kann. Diese Öffnung kann beispielsweise durch einen Ring realisiert sein, der optional zum Einlegen oder Herausnehmen der Leitung geöffnet werden kann. Geeignete Halteelemente sind für andere Anwendungen im Handel erhältlich und können erfindungsgemäß verwendet werden, beispielsweise solche unter der Bezeichnung Systemhalter von der Firma PMA AG, Uster (Schweiz).

Bei einer bevorzugten Ausführungsform sind die Aufnahmen einstückig mit den jeweiligen Seitenlaschen ausgebildet, d.h. die Aufnahme ist an der Außenseite der Seitenlaschen angeformt.

Eine andere, besonders bevorzugte Ausführungsform ist dadurch gekennzeichnet, dass die Aufnahmen in einem an den Außenseiten der Seitenlaschen befestigbaren Aufnahmeelement ausgebildet sind. Diese Ausführungsform hat den Vorteil, dass nicht nur die außen verlaufende Leitung zwecks Wartung oder Reparatur leicht abgenommen werden kann, sondern auch die einfache Anbringung einer zusätzlichen Leitung, die bei der Herstellung der Energieführungskette noch nicht vorgesehen war, möglich ist.

Das Aufnahmeelement ist bevorzugt mit elastisch verformbaren Rasthaken an der Außenseite der Seitenlaschen befestigbar. Diese Rasthaken können die oberen und unteren Schmalseiten der Seitenlaschen umgreifen und an den Innenseiten der Seitenlaschen anliegen. Solche Rasthaken können an den Enden je eines am oberen und unteren Ende des Aufnahmeelements vorhandenen, vorzugsweise um 90°, abgewinkelten Bereichs vorgesehen sein, der seinerseits an der Schmalseite der Seitenlasche anliegen kann. Vorzugsweise sind am Aufnahmeelement jeweils zwei obere und zwei untere Rasthaken vorhanden. Der Abstand je zweier Rasthaken kann so bemessen sein, dass sie sich an den an der Innenseite der Seitenlasche angebrachten Quersteg anlegen, wodurch eine Verschiebung des Aufnahmeelements in Längsrichtung der Energieführungskette verhindert wird. Die Rasthaken können an ihren Enden abgeschrägt sein, wodurch das Aufsetzen des Aufnahmeelements auf die Seitenlaschen erleichtert wird.

Zentral an jedem abgewinkelten Bereich kann mindestens ein weiterer Rastnocken vorhanden sein, der in eine ohnehin vorhandene Ausnehmung in der Schmalseite der Seitenlasche einrasten und die Verbindung des Aufnahmeelements mit der Seitenlasche verstärken und insbesondere die Längsverschiebung des Aufnahmeelements auf der Seitenlasche verhindern kann.

Bevorzugt sind die Aufnahmen in Form rechtwinkliger Ausnehmungen in den Seitenlaschen bzw. den Aufnahmeelementen gestaltet, wobei diese Ausnehmungen mit ihrer längeren Seite quer zur Energieführungskette ausgerichtet und in dieser Richtung nach einer Seite offen sind. An dieser offenen Seite kann der in die Aufnahme einschiebbare Abschnitt des Halteelementes eingesetzt werden.

Die Innenflächen der quer zur Energieführungskette verlaufenden Längsseiten der Ausnehmungen sind bevorzugt profiliert, so dass sie ein in die Ausnehmung eingesetztes Halteelement mit entsprechendem Gegenprofil in Richtung senkrecht zur Seitenlaschen fixieren können. Solche Profile können beispielsweise Nut/Feder oder eine Schwalbenschwanzverbindung sein. Selbstverständlich ist es auch möglich, das Halteelement statt mittels einer durchgehenden Nut mit anderen Mitteln in der Ausnehmung zu fixieren, beispielsweise durch an der Innenkante vorspringende Nocken oder dergleichen.

An der offenen Seite der Aufnahme ist vorzugsweise ein Einführungstrichter, das heißt eine Erweiterung, bevorzugt mit Schrägen, ausgebildet, die das Einschieben des Halteelementes erleichtern kann. An den Seiten dieses Einführungstrichters kann mindestens eine Rastfeder ausgebildet sein, die beim Einführen des Halteelementes elastisch ausweicht und sich danach entspannen, in die Ausgangsstellung zurückkehren und das Herausfallen des Halteelementes aus der Ausnehmung verhindern kann.

Die außerhalb der Kettenglieder verlaufende Leitung kann unmittelbar von dem Halteelement gestützt werden. Es ist aber auch vorteilhaft, eine oder insbesondere einige Leitungen in einem flexiblen Rohr aufzunehmen, das dann seinerseits von den Halteelementen gestützt wird. Das flexible Rohr kann ein Wellrohr, beispielsweise aus Kunststoff, oder auch ein entsprechend flexibler, elastischer und stabiler Schlauch, beispielsweise ein Wellschlauch mit einer Spiralverstärkung, sein.

Das Herausfallen der Halteelemente aus den Aufnahmen lässt sich auch wirksam verhindern, wenn die Aufnahmen so angeordnet werden, dass ihre Öffnungen im Längsverlauf der Kette abwechselnd nach oben und unten gerichtet sind. Dies kann beim Aufbau der Energieführungskette bewirkt werden, indem die mit den Aufnahmen versehenen Seitenlaschen mit entsprechender Orientierung eingebaut werden. Noch einfacher erreicht man dies mit den nachträglich anbringbaren Aufnahmeelementen.

Vorzugsweise sind nachträglich anbringbare Aufnahmeelemente an nur einer Seite d.h. an genau einer Seite der Energieführungskette vorgesehen. In vielen Anwendungen wird nur eine zusätzliche Leitung benötigt, die schnell austauschbar sein soll.

Ein weiterer Aspekt der Erfindung betrifft ein Aufnahmeelement als Anbauteil für eine Energieführungskette. Gemäß diesem Aspekt hat das eine rechtwinklige Ausnehmung, die mit ihrer längeren Seite quer zur Energieführungskette ausrichtbar und in dieser Richtung nach einer Seite offen ist, wobei das Aufnahmeelement, an mindestens einer der Schmalseiten quer zu den längeren Seiten, elastisch verformbare Rasthaken aufweist, welche die oberen und unteren Schmalseiten der Seitenlaschen umgreifen und können. Vorzugsweise liegen die Rasthaken an Flächen der Innenseiten der Seitenlaschen des Kettenglieds an.

Das Aufnahmeelement eignet sich erfindungsgemäß zum schnellen und einfachen Befestigen und Abnehmen von Zusatzteilen, insbesondere von Halteelementen für mindestens ein zusätzliche Leitung, die außerhalb der Kettenglieder geführt sein soll.

Bevorzugt sind bei diesem Aufnahmeelement die Innenflächen der Längsseiten der Ausnehmung so profiliert, dass ein in die Ausnehmung eingesetztes Zusatzteil bzw. Halteelement mit entsprechendem Gegenprofil in einer Richtung senkrecht zur Seitenlasche fixiert ist.

Vorteilhaft umfasst das Aufnahmeelement an der offenen Seite der Ausnehmung einen erweiterten Einführungstrichter, der das Einsetzen des Halteelementes in die Ausnehmung erleichtert. Besonders vorteilhaft ist mindestens eine Rastfeder vorhanden, die am Einführungstrichter vorgesehen ist und das Herausfallen des eingesetzten Halteelementes aus der Ausnehmung verhindern kann.

Vorteilhaft bei der erfindungsgemäßen Energieführungskette ist unter anderem, dass herkömmliche handelsübliche Halteelemente verwendet werden können.

Weiterhin ist der Aus- und Einbau der außen an der Kette geführten Leitung zwecks Wartung, Reparatur oder Austausch gegenüber dem Stand der Technik wesentlich erleichtert. Beispielsweise kann man die Leitung vorbereiten, indem man sie mit Halteelementen versieht. Die so vorbereitete Leitung kann dann durch einfaches Herausnehmen bzw. Einsetzen der Halteelemente in die Aufnahmen der Aufnahmeelemente bzw.

Seitenlaschen gegen die eingebaute Leitung ausgetauscht werden, was bei geringster Stillstandzeit möglich ist. Wenn statt der Leitung selbst ein Wellrohr in die Halteelemente eingesetzt ist, welches seinerseits die Leitung aufnimmt, können die Halteelemente sich auf dem Wellrohr nicht verschieben, was den Einbau weiter erleichtert.

Weil die Halteelemente in einer Richtung im Wesentlichen parallel zu den Seitenlaschen und nicht von diesen weg aus den Aufnahmen entfernt bzw. in diese eingesteckt werden, ist der Ein- und Ausbau auch bei beengten Raumverhältnissen leicht möglich.

Ein weiterer Vorteil der erfindungsgemäßen Lösung ist, dass die Haltekräfte an den stärkeren Bereichen der Seitenlaschen zwischen den Schwenklagern angreifen und daher diese Lager weniger stark beansprucht werden, sodass die Gefahr von Abrieb bzw. Verschleiß und Bruch geringer ist.

Ein dritter unabhängiger Aspekt der Erfindung betrifft eine Seitenlasche für eine Energieführungskette welche eine erfindungsgemäße Aufnahme für ein Halteelement aufweist. Die Seitenlasche, insbesondere die Aufnahme kann hierbei eines oder mehrere der vorstehenden Merkmale aufweisen. Die Seitenlasche weist eine Außenseite, eine Innenseite und zwei gegenüberliegende Schmalseiten auf. Eine Aufnahme mit einer Ausnehmung ist an der Außenfläche, nämlich an der Außenseite der Seitenlasche im mittleren Bereich und zwischen jeweils zwei Schwenkachsen, einstückig mit dem Körper der Seitenlasche ausgebildet, vorzugsweise an der Außenseite der Seitenlasche angeformt. Ein Halteelement kann längs einer parallel zur Seitenlasche verlaufenden Ebene an der Außenseite in diese Aufnahme eingeschoben und in dieser Aufnahme zwischen den Schmalseiten im mittleren Bereich der Laschenhöhe, insbesondere auf Höhe der neutralen Faser, befestigt werden ohne über die Schmalseiten in Richtung der Laschenhöhe hervorzustehen, wobei mittels dem Halteelement zusätzlich mindestens eine weitere Leitung, insbesondere ein Wellschlauch, befestigbar ist.

In einer Weiterbildung ist in der in der Aufnahme bzw. Ausnehmung ein Zentriervorsprung ausgebildet ist, welcher mit einer Durchgangsbohrung in einem Fußabschnitt des Halteelementes zentrierend zusammenwirkt, sodass ein entsprechendes Halteelement unabhängig von seiner Baugröße stets etwas mittig auf Höhe der neutralen Faser der Energieführungskette einrastet.

Weitere Merkmale und Vorteile der Erfindung werden im Folgenden, ohne Beschränkung der Allgemeinheit der vorstehenden Beschreibung, anhand der beigegebenen Zeichnungen näher erläutert. Es zeigen:
- Figur 1: eine Energieführungskette nach dem Stand der Technik,
- Figur 2: einen Ausschnitt aus einer Energieführungskette nach dem Stand der Technik,
- Figur 3: ein Aufnahmeelement gemäß einem ersten Ausführungsbeispiel der Erfindung,
- Figur 4: eine Außenlasche mit angebrachtem Aufnahmeelement,
- Figur 5: ein Aufnahmeelement gemäß einem zweiten Ausführungsbeispiel der Erfindung,
- Figur 6: eine Seitenlasche mit dem Aufnahmeelement der Figur 5,
- Figur 7: eine Seitenlasche mit angeformter Aufnahme gemäß einem dritten Ausführungsbeispiel der Erfindung,
- Figur 8: die Seitenlasche der Figur 7 mit eingesetztem Halteelement, und
- Figur 9: eine Seitenlasche mit angeformter Aufnahme gemäß einem vierten Ausführungsbeispiel der Erfindung.

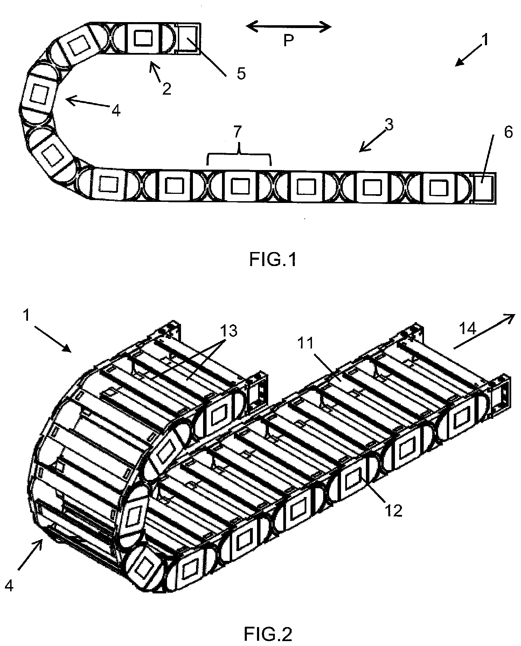

Die in Figur 1 schematisch dargestellte bekannte Energieführungskette 1 verbindet eine feste Anschlussstelle (nicht näher gezeigt) an einem ersten Endbefestigungsteil 5 mit einer beweglichen Anschlussstelle (nicht näher gezeigt) an einem zweiten Endbefestigungsteil 6, beispielsweise zur Versorgung mit elektrischem Strom, elektrischen Steuersignalen und Druckluft. Die bewegliche Anschlussstelle ist in den Richtungen des Doppelpfeils P verfahrbar. In der gezeigten Ausführung ist die Energieführungskette 1 so gestaltet, dass das Obertrum 2 der Kette freitragend ist, d.h. dass dieses nicht auf dem Untertrum 3 abgleitet. Die einzelne Kettenglieder 7 sind schwenkbar miteinander verbunden. Bei der Bewegung der Anschlussstelle 6 beispielsweise nach rechts gelangen Kettenglieder des Obertrums 2 in den Umlenkbereich 4 und danach in das Untertrum 3 und werden z.B. mit diesem abgelegt. Entsprechendes geschieht bei der Bewegung nach links. Auch ein vertikaler Einbau der Kette ist möglich.

Figur 2 zeigt einen Ausschnitt aus einer Energieführungskette nach dem Stand der Technik. Man erkennt äußere Seitenlaschen 12, die durch Querstege 13 verbunden sind und jeweils ein Kettenglied bilden. Zwischen den solcherart gebildeten Kettengliedern alternierend befinden sich weitere Kettenglieder, welche Innenlaschen 11 und gleichartige Querstege 13 umfassen. In dem von den Kettengliedern gebildeten Innenraum der Energieführungskette verlaufen die zu führenden Leitungen in Richtung des Pfeils 14. Jede Lasche ist mit ihrer benachbarten Lasche schwenkbar verbunden.

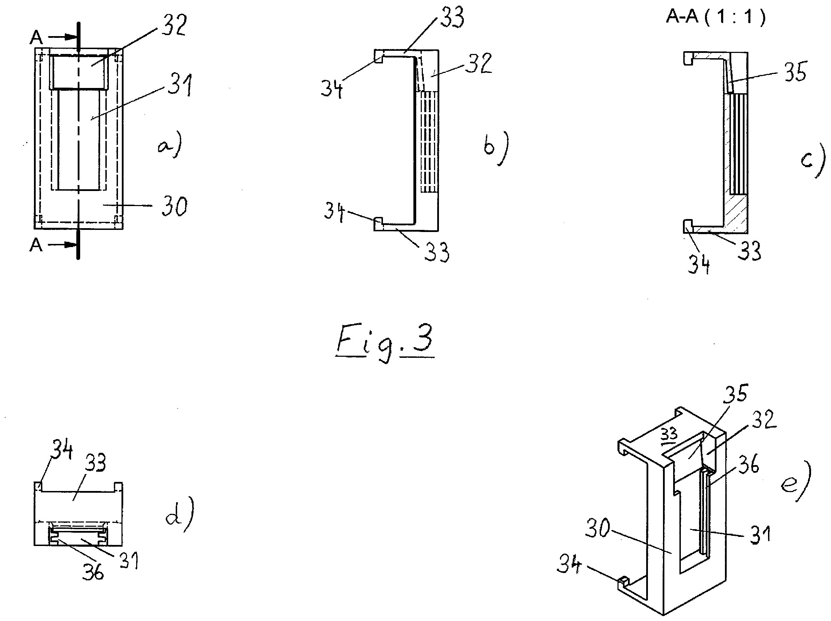

Figur 3 zeigt eine erste Ausführungsform für ein erfindungsgemäßes Aufnahmeelement zur Anbringung an der Außenseite einer Seitenlasche, und zwar a) eine Vorderansicht, b) eine Seitenansicht, c) einen Schnitt längs A-A in a), d) eine Draufsicht und e) eine isometrische Ansicht. Diese Ausführungsform umfasst einen quaderförmigen Körper 30, in dem eine Ausnehmung 31 angebracht ist. Diese Ausnehmung ist am oberen Ende offen, wobei ein etwas erweiterter Einführungstrichter 32 das Einführen des Halteelementes in die Ausnehmung erleichtern soll. Die Rastfeder 35 erstreckt sich hierbei über die Breite der Ausnehmung 31. Sie wird beim Einschieben des Halteelementes elastisch zurückgebogen, springt nach Durchgang des Halteelementes wieder in ihre Ausgangslage zurück und verhindert so dessen Herausfallen. An der inneren Längsseite der Ausnehmung ist eine Nut 36 angebracht, welche eine entsprechende Feder am Halteelement aufnimmt, wodurch dieses in der Ausnehmung fixiert wird und nicht nach vorn herausfallen kann. Am oberen und unteren Ende des Körpers 30 ist je ein um 90° abgewinkelter Bereich 33 vorhanden, der sich bei der Anbringung an der Seitenlasche an die Schmalseiten der Lasche anlegen kann. Die abgewinkelten Bereiche sind so dimensioniert, dass sie beim Aufstecken des Aufnahmeelements elastisch nach oben bzw. unten gebogen werden können, wodurch die an ihren Enden angebrachten Rastnocken 34 über die Schmalseiten der Seitenlaschen gleiten und sich nach Rückstellung der abgewinkelten Bereiche an die Innenseiten der Seitenlaschen anlegen können.

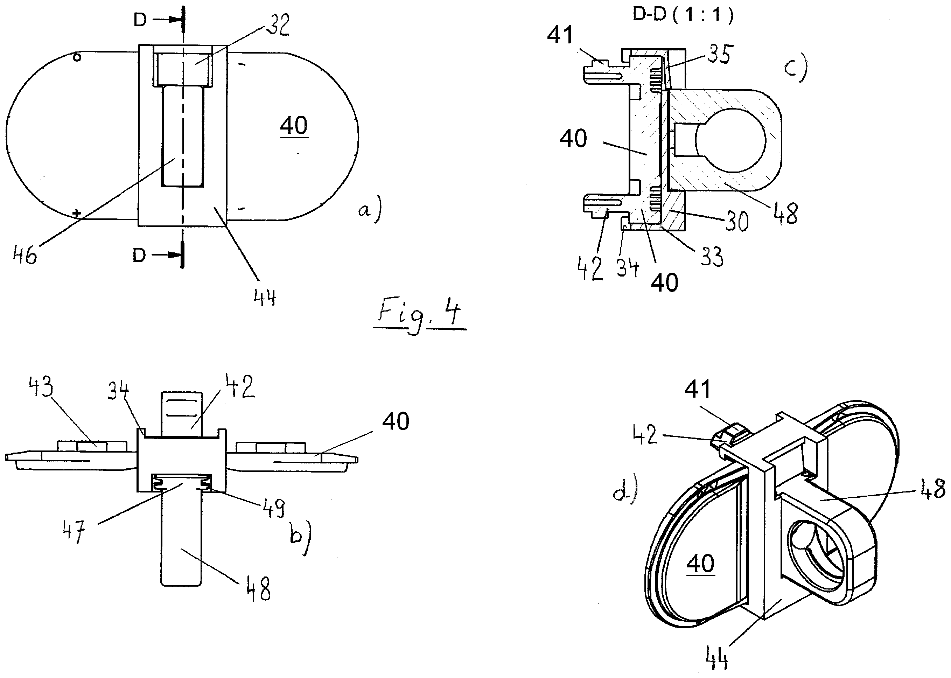

Figur 4 zeigt eine äußere Seitenlasche einer erfindungsgemäßen Energieführungskette, und zwar a) in Vorderansicht, b) in Draufsicht, c) als Schnitt D-D in a) und d) in isometrischer Ansicht. Die Seitenlaschen 40 weisen jeweils einen Körper 40 auf, der mit einem Zapfen 42 zur Aufnahme eines Querstegs sowie mit Schwenkhülsen 43, welche die entsprechenden Schwenkzapfen der benachbarten Laschen aufnehmen können, versehen ist. Die Querstege können dabei auf den Zapfen 42 aufgesteckt und mit dem Rastnocken 41 verrastet werden. An der Seitenlasche 40 ist ein Aufnahmeelement 44 gemäß Figur 3 angebracht, für dessen Einzelheiten die dort verwendeten Bezugszeichen benutzt werden. Das Aufnahmeelement 44 liegt mit seinem Körper 30 an der Vorderseite der Seitenlasche 40 und mit beiden abgewinkelten Bereichen 33 an der Schmalseite der Seitenlaschen 40 an, wobei die Rastnocken 34 an der Innenseite der Seitenlaschen 40 anliegen. In der Draufsicht b) kann man erkennen, dass dann, wenn ein hier nicht gezeigter Quersteg auf den Zapfen 42 aufgesteckt ist, die Rastnocken 34 am Quersteg anliegen und eine Längsverschiebung des Aufnahmeelements auf der Seitenlasche verhindern können. In die Aufnahme des Aufnahmeelements 44 ist ein Halteelement 46 eingesteckt, dessen Details in der Draufsicht b) und im Schnitt c) erkennbar werden. Es weist einen Fußabschnitt 47 und einen Ringabschnitt 48 auf. Federn 49 greifen in die Nuten 36 (Figur 3) an den inneren Längswänden der Ausnehmung des Aufnahmeelements ein und verhindern, dass dieses nach vorne herausfällt. Im erweiterten Einführungstrichter 32 des Aufnahmeelements 44 ist die Rastfeder 35 angeordnet, die, wie im Schnitt c) erkennbar, das Herausfallen des Halteelements nach oben verhindert.

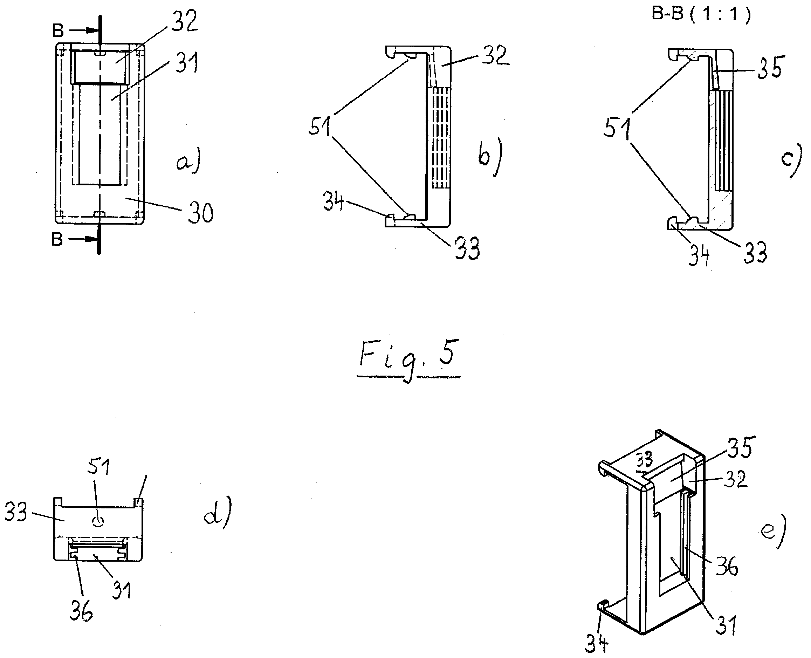

Figur 5 zeigt eine andere Ausführungsform des erfindungsgemäßen Aufnahmeelements, wiederum a) in Vorderansicht, b) in Seitenansicht, c) im Schnitt B-B gemäß a), d) als Draufsicht und e) als isometrische Ansicht. Die Ausführungsform entspricht in mehreren Merkmalen der in Figur 3 gezeigten; deshalb werden für gleiche Merkmale gleichen Bezugszeichen verwendet. Wiederum ist im Körper 30 des Aufnahmeelements und eine Ausnehmung 31 mit einem Einführungstrichter 32 vorhanden. Die abgewinkelten Bereiche 33 mit den Rastnocken 34 sowie die Rastfeder 35 und die Nuten 36 entsprechen ebenfalls der oben gezeigten Ausführungsform. Zusätzlich zu dieser Ausführungsform ist aber das in Figur 5 gezeigte Aufnahmeelement mit jeweils einer zusätzlichen Rastnocke 51 in der Mitte des abgewinkelten Bereichs versehen, die in eine in der Schmalseite der Seitenlasche vorhandene Öffnung einrasten kann und die Fixierung des Aufnahmeelements an der Seitenlaschen noch verbessert.

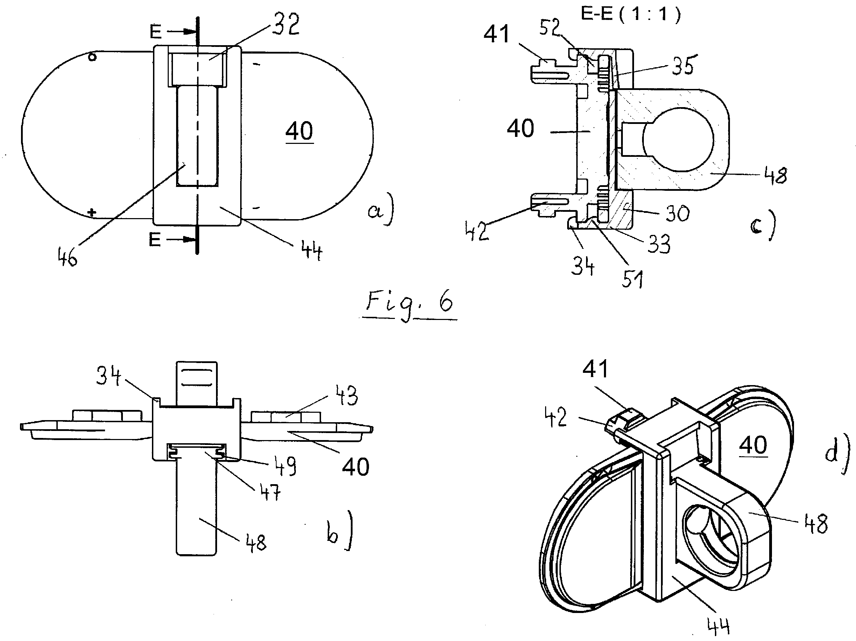

Figur 6 zeigt eine Seitenlasche einer zweiten Ausführungsform der erfindungsgemäßen Energieführungskette, wobei das Aufnahmeelement nach Figur 5 Verwendung findet. Soweit gleichwirkende Merkmale wie bei der ersten Ausführungsform vorhanden sind, werden die gleichen Bezugszeichen verwendet. Wiederum ist die Seitenlasche 40 mit einem die Rastnocke 41 aufweisenden Zapfen 42 zum Aufstecken und Verrasten eines Querstegs und mit Schwenkhülsen 43 versehen. In das Aufnahmeelement 44 ist das Halteelement 46 eingesteckt, das wiederum von der Rastfeder 35 am Herausfallen nach oben und von der Nut-Feder-Verbindung 49 am Herausfallen nach vorn gehindert wird. Zusätzlich ist bei dieser Ausführungsform ein weiterer zentral an jedem abgewinkelten Bereich 33 des Aufnahmeelements 44 angebrachter Rastnocken 51 vorhanden, der in eine vorhandene Ausnehmung 52 in der Seitenfläche der Seitenlasche 40 eingreift. Hierdurch wird zusätzlich eine Fixierung des Aufnahmeelements in Längsrichtung der Energieführungskette erzielt. Das ist besonders von Bedeutung, wenn die Rastnocken 34 nicht, wie oben beschrieben, ohne Spiel am Quersteg anliegen.

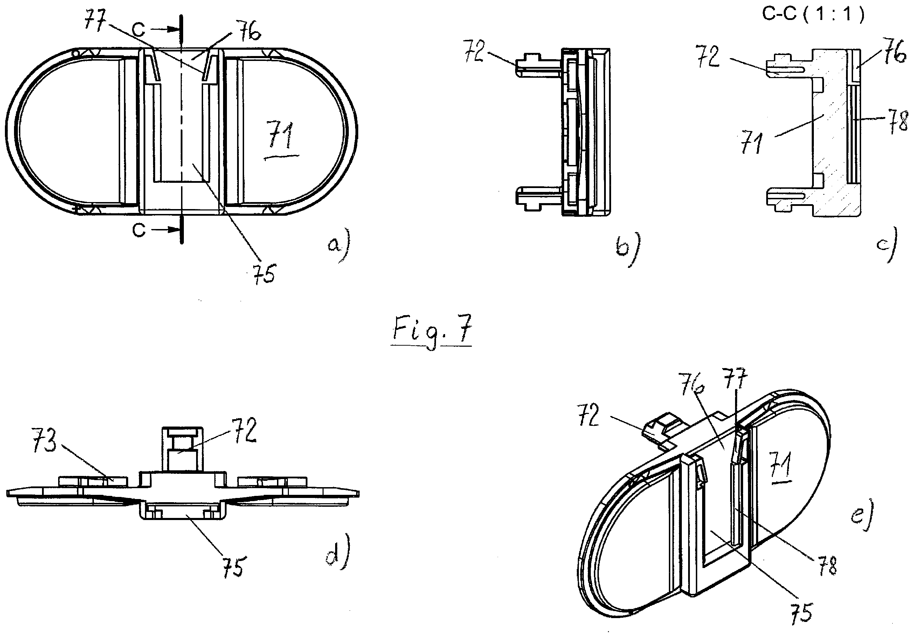

Figur 7 zeigt eine Seitenlasche für eine dritte Ausführungsform der erfindungsgemäßen Energieführungskette, und zwar a) in Vorderansicht, b) in Seitenansicht, c) im Schnitt C-C gemäß a), d) in Draufsicht und e) in isometrischer Ansicht. In dieser Ausführungsform ist die Aufnahme für das Halteelement nicht in einem aufsteckbaren Aufnahmeelement vorhanden, sondern einstückig an der Seitenlasche angeformt. Wie bei den anderen Ausführungsformen umfasst die Seitenlasche hier ebenfalls einen Körper 71 sowie Zapfen 72 mit Rastnocken für (nicht gezeigte) Querstege sowie Schwenkhülsen 73 zur Aufnahme der Schwenkzapfen der benachbarten Seitenlaschen. Im Bereich zwischen den Schwenkachsen ist in der (hier verstärkten) Außenwand der Seitenlasche eine nach vorn und oben offene Ausnehmung 75 vorhanden, die nach oben einen erweiterten Einführungstrichter 76 aufweist. Zwei Rastfedern 77 zur Fixierung eines eingeführten Halteelementes sind in diesem Fall an den Schmalseiten des Einführungstrichters ausgebildet. Wiederum ist eine Nut 78 vorhanden, in die das Halteelement mit einer Feder zur Befestigung eingreifen kann.

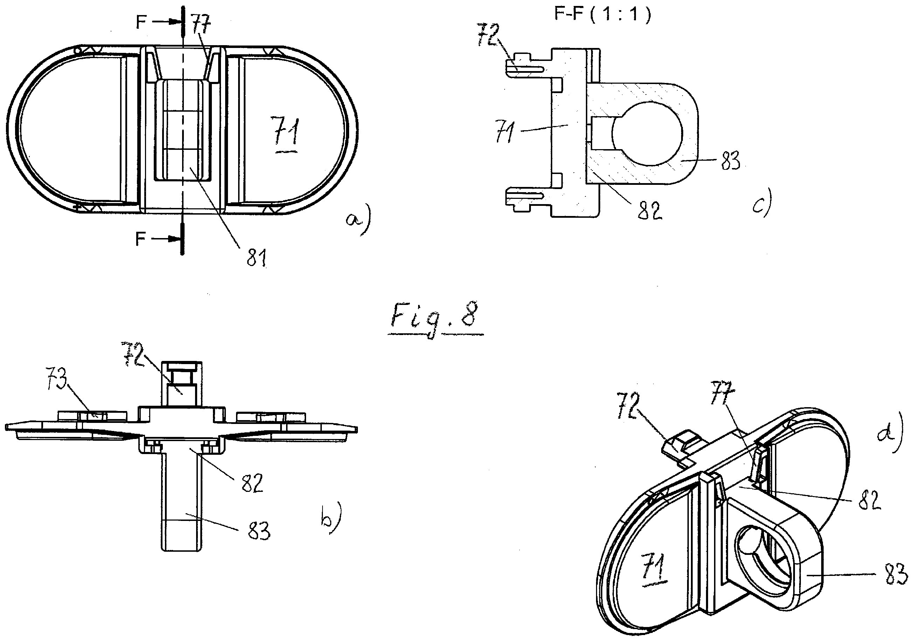

Figur 8 zeigt die Seitenlasche aus Figur 7 mit eingesetztem Halteelement 81, und zwar a) in Vorderansicht, b) in Draufsicht, c) im Schnitt F-F nach a) und d) in isometrischer Ansicht. Man erkennt, dass der Fußabschnitt 82 des Halteelementes 81 in die Ausnehmung 75 (Figur 7) eingesetzt ist und nach oben durch die Rastfedern 77 und nach vorn durch eine in die Nut 78 (Figur 7) eingreifende Feder am Herausfallen gehindert wird.

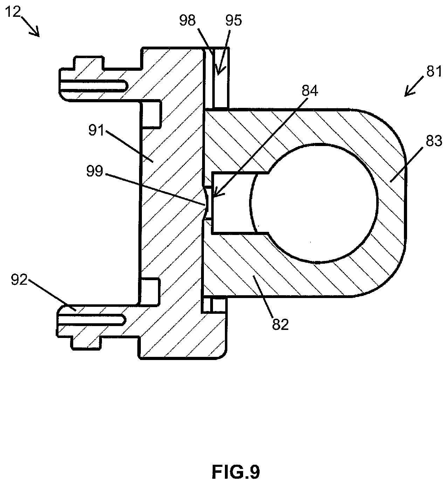

Figur 9 zeigt ein bevorzugtes Beispiel einer äußeren Seitenlasche 12 im mittigen Querschnitt. Die Seitenlasche 12 hat eine einstückig mit dem Körper 91 der Seitenlasche 12 hergestellte Aufnahme, z.B. im Spritzgussverfahren, für das Halteelement 81. Im Vergleich zu Figur 7-8 weist die Aufnahme zusätzlich einen Zentriervorsprung 99 in Art einer Nase auf. Der Zentriervorsprung 99 hat die Form einer Kugelhaube bzw. Kalotte und bildet eine geringfügige Erhöhung, auf welcher eine Durchgangsbohrung 84 des Halteelements 81 beim Einschub zentrieren und einrasten kann. Der Radius des Zentriervorsprungs 99 ist gewählt für Durchgangsbohrungen 84 von ca. 4-10mm, insbesondere von 6-8mm, Durchmesser. Der Zentriervorsprungs 99 kann zum leichteren Anbringen des Halteelements 81 eine Anlaufschräge haben (nicht gezeigt), die zum Einführungstrichter abfällt. Dank des Zentriervorsprungs 99 kann eine in Höhe und Breite größere Ausnehmung 95 zum Befestigen verschiedener Baugrößen von Halteelementen 81 vorgesehen werden, ohne dass eine einfache mittige Befestigung auf der neutralen Faser beeinträchtigt wird. Das Halteelement 81 kann so für unterschiedliche Durchmesser eines anzubringenden Wellrohrs passend gewählt werden, d.h. eine Seitenlaschen 12 kann unterschiedliche Halteelemente 81 aufnehmen. Andere Merkmale der Seitenlasche 12, insbesondere der Aufnahme sind identisch zu denen in FIG.7-8, dies gilt ebenfalls für das Halteelement 81.

### Bezugszeichenliste

FIG.1-2
   - 1: Energieführungskette
   - 2: Obertrum
   - 3: Untertrum
   - 4: Umlenkbereich
   - 5, 6: Endbefestigungsteil
   - 7: Kettenglied
   - 11: innere Seitenlasche
   - 12: äußere Seitenlasche
   - 13: Quersteg
   - 14: Längsrichtung der Kette
FIG.3-4
   - 30: Körper des Aufnahmeelements
   - 31: Ausnehmung
   - 32: Einführungstrichter
   - 33: abgewinkelter Bereich
   - 34: Rastnocken
   - 35: Rastfeder
   - 36: Nut
   - 40: Körper der Seitenlasche
   - 42: Zapfen für Quersteg
   - 41: Rastnocken für Quersteg
   - 43: Schwenkhülse
   - 44: Aufnahmeelement
   - 46: Halteelement
   - 47: Fußabschnitt des Halteelementes 72
   - 48: Ringabschnitt des Halteelementes
   - 49: Feder des Fußabschnitts
FIG.5-6
   - 30: Körper des Aufnahmeelements
   - 31: Ausnehmung
   - 32: Einführungstrichter
   - 33: abgewinkelter Bereich
   - 34: Rastnocken
   - 35: Rastfeder
   - 36: Nut
   - 40: Körper der Seitenlasche
   - 42: Zapfen für Quersteg
   - 41: Rastnocken für Quersteg
   - 43: Schwenkhülse
   - 44: Aufnahmeelement
   - 46: Halteelement
   - 47: Fußabschnitt des Halteelementes 72
   - 48: Ringabschnitt des Halteelementes
   - 49: Feder des Fußabschnitts
   - 51: zentrale Rastnocken
   - 52: Ausnehmung in Schmalseite der Seitenlasche
FIG.7-8
   - 71: Körper der Seitenlasche
   - 72: Zapfen für Quersteg mit Rastnocken
   - 73: Schwenkhülsen
   - 75: Ausnehmung
   - 76: Einführungstrichter
   - 77: Rastfeder
   - 78: Nut
   - 81: Halteelement
   - 82: Fußabschnitt des Halteelementes
   - 83: Ringabschnitt des Halteelementes
FIG. 9
   - 12: äußere Seitenlasche
   - 91: Körper der Seitenlasche
   - 92: Zapfen für Quersteg mit Rastnocken
   - 95: Ausnehmung
   - 98: Nut
   - 99: Zentriervorsprung
   - 81: Halteelement
   - 82: Fußabschnitt des Halteelementes
   - 83: Ringabschnitt des Halteelementes
   - 84: Durchgangsbohrung

## Patentansprüche

1. Energieführungskette (1) zum Führen von Leitungen wie Kabeln, Schläuchen oder dergleichen mit einer Mehrzahl gelenkig miteinander verbundener Kettenglieder (7), von denen zumindest ein Teil zueinander parallele Seitenlaschen (11, 12) und diese verbindende Querstege (13) aufweist, wobei benachbarte Kettenglieder (7) jeweils um eine quer zur Längsrichtung der Energieführungskette (1) verlaufende Schwenkachse gegeneinander schwenkbar sind, wobei die Mehrzahl der geführten Leitungen in Längsrichtung innerhalb der Kettenglieder (7) verläuft, während mindestens eine weitere Leitung außerhalb der Kettenglieder (7) angeordnet und von an der Energieführungskette (1) vorgesehenen Halteelementen (46, 81) gestützt ist, **dadurch gekennzeichnet**, das s an mindestens einer Seite der Energieführungskette (1) auf den Außenflächen an zumindest einigen der Seitenlaschen (12) im Bereich zwischen jeweils zwei Schwenkachsen Aufnahmen (31, 75, 95) vorgesehen sind, in denen die Halteelemente (46, 81) für die mindestens eine weitere Leitung längs einer parallel zur Seitenlasche (12) verlaufenden Ebene eingeschoben werden können, wobei die Aufnahmen jeweils in einer Richtung, welche quer zur Längsrichtung und quer zu den Schwenkachsen verläuft, mittig an der Seitenlasche vorgesehen sind.

2. Energieführungskette nach Anspruch 1, **dadurch gekennzeichnet, dass** jede Aufnahme (75, 95) einstückig mit der Seitenlasche (12) ausgebildet ist, und vorzugsweise an der Außenseite der Seitenlasche (12) angeformt ist.

3. Energieführungskette nach Anspruch 2, **dadurch gekennzeichnet, dass** die Energieführungskette (1) alternierende innere Seitenlaschen (11) und äußere Seitenlaschen (12) aufweist, wobei die Aufnahmen (75, 95) einstückig mit zumindest einigen der äußeren Seitenlaschen ausgebildet sind.

4. Energieführungskette nach Anspruch 1, 2 oder 3, insbesondere nach Anspruch 2, **dadurch gekennzeichnet, dass** die Aufnahmen (31, 75, 95) rechtwinklige Ausnehmungen (31, 75, 95), insbesondere in den Seitenlaschen (12), sind, die mit ihrer längeren Seite quer zur Längsrichtung der Energieführungskette (1) ausgerichtet und nach einer Seite offen sind.

5. Energieführungskette nach Anspruch 4, **dadurch gekennzeichnet, dass** die Innenflächen der Längsseiten der Ausnehmungen (31, 75, 95) so profiliert sind, dass ein in die Ausnehmung (31, 75, 95) eingesetztes Halteelement (46, 81) mit entsprechendem Gegenprofil in einer Richtung senkrecht zur Seitenlasche (12) fixiert ist.

6. Energieführungskette nach einem der vorangehenden Ansprüche 1 bis 5, **dadurch gekennzeichnet, dass** eine oder vorzugsweise mehrere außerhalb der Kettenglieder (7) verlaufende Leitungen in einem flexiblen Rohr aufgenommen sind, welches von den Halteelementen (46, 81) gestützt wird.

7. Energieführungskette nach einem der Ansprüche 1 bis 3, **dadurch gekennzeichnet, dass** in der Aufnahme (75, 95) ein Zentriervorsprung (99) ausgebildet ist, welcher mit einer Durchgangsbohrung (84) in einem Fußabschnitt (82) des Halteelementes (81) zusammenwirkt zur mittigen Befestigung auf Höhe der neutralen Faser.

8. Energieführungskette nach einem der vorangehenden Ansprüche 1 bis 6, **dadurch gekennzeichnet, dass** die Aufnahmen (31, 75, 95) an genau einer Seite der Energieführungskette (1) vorgesehen sind.

9. Seitenlasche (12) für eine Energieführungskette, wobei die Seitenlasche jeweils zwei Schwenkachsen definiert, um welche zwei benachbarten Seitenlaschen (12) gegeneinander schwenkbar sind, die Schwenkachsen in einer Längsrichtung der Seitenlasche beabstandet sind und quer zu dieser Längsrichtung verlaufen, **dadurch gekennzeichnet, dass** an der Außenfläche der Seitenlasche (12) im mittleren Bereich zwischen jeweils zwei Schwenkachsen eine Aufnahme (75, 95) in Form einer Ausnehmung (75, 95) einstückig mit dem Körper (71, 91) der Seitenlasche (12) ausgebildet ist, in welcher ein Halteelement (81) längs einer parallel zur Seitenlasche (12) verlaufenden Ebene eingeschoben werden kann, wobei die Aufnahme in einer Richtung, welche quer zur Längsrichtung und quer zu den Schwenkachsen verläuft, mittig an der Seitenlasche vorgesehen ist, und mittels dem Halteelement (81) zusätzlich mindestens eine weitere Leitung, insbesondere ein Wellschlauch, befestigbar ist.

10. Seitenlasche (12) nach Anspruch 9, **dadurch gekennzeichnet, dass**
- die Aufnahme (75, 95) in Form einer Ausnehmung (75, 95) ausgebildet ist und die Innenflächen der Längsseiten der Ausnehmungen (75, 95) so profiliert sind, dass ein in die Ausnehmung (75, 95) eingesetztes Halteelement (81) mit entsprechendem Gegenprofil in einer Richtung senkrecht zur Seitenlasche (12) fixierbar ist; und/oder
- die Aufnahme (75, 95) an der Seitenlasche (12) angeformt ist.

11. Seitenlasche (12) nach Anspruch 9, **dadurch gekennzeichnet, dass** die Aufnahme (75, 95) eine rechtwinklige Ausnehmung (75, 95) in der Seitenlasche (12) ist, die mit ihrer längeren Seite quer zur Längsrichtung Energieführungskette (1) ausgerichtet ist.

12. Seitenlasche (12) nach einem der Ansprüche 9 bis 11, **dadurch gekennzeichnet, dass** in der Ausnehmung (95) ein Zentriervorsprung (99) ausgebildet ist, welcher mit einer Durchgangsbohrung (84) in einem Fußabschnitt (82) des Halteelementes (81) zusammenwirkt zur mittigen Befestigung auf Höhe der neutralen Faser.

13. Seitenlasche (12) nach einem der Ansprüche 9 bis 12, **dadurch gekennzeichnet, dass** die Ausnehmung (75, 95) in Richtung quer zur Längsrichtung der Energieführungskette (1) nach einer Seite offen ist.

14. Energieführungskette (1) nach einem der Ansprüche 1 bis 8 oder Seitenlasche (12) nach einem der Ansprüche 9 bis 13, **dadurch gekennzeichnet, dass** in der Aufnahme (31, 75, 95) ein Halteelement (46, 81) für einen Wellschlauch befestigt ist, um einen Wellschlauch an der Energieführungskette (1) zu befestigen.

## Claims

1. An energy guiding chain (1) for guiding lines like cables, hoses or the like comprising a plurality of hingedly interconnected chain links (7) of which at least a portion has mutually parallel side plates (11, 12) and transverse limbs (13) connecting same, wherein adjacent chain links (7) are pivotable relative to each other about a respective pivot axis extending transversely relative to the longitudinal direction of the energy guiding chain (1), wherein the plurality of the guided lines extends in the longitudinal direction within the chain links (7) while at least one further line is arranged outside the chain links (7) and is supported by holding elements (46, 81) provided on the energy guiding chain (1), **characterised in that,** at at least one side of the energy guiding chain (1) on the outside surfaces of at least some of the side plates (12) in the region between two respective pivot axes, receiving means (31, 75, 95) are provided in which the holding elements (46, 81) for the at least one further line can be inserted along a plane extending parallel to the side plate (12), wherein the receiving means (31, 75, 95) are provided centrally, with respect to a direction which runs transversely to the longitudinal direction and transversely to the pivot axes, on the respective side plate (12) .

2. An energy guiding chain according to claim 1 **characterised in that** each of the receiving means (75, 95) is integral with the side plate (12), preferably is integrally formed on the exterior side of the side plate (12).

3. An energy guiding chain according to claim 2 **characterised in that** the energy guiding chain (1) alternately has internal side plates (11) and external side plates (12), wherein the receiving means (75, 95) are integral with at least some of the external side plates (12).

4. An energy guiding chain according to one of the claims 1, 2 or 3, in particular according to claim 2, **characterised in that** the receiving means (31, 75, 95) are rectangular indentations (31, 75, 95), in particular in the side plates (12), which are oriented with their longer side transversely relative to the longitudinal direction of the energy guiding chain (1) and which are open **in that** direction towards one side.

5. An energy guiding chain according to claim 4 **characterised in that** the inside surfaces of the longitudinal sides of the indentations (31, 75, 95) are profiled in such a way that a holding element (46, 81) with corresponding counterpart profile, that is fitted into the indentation (31, 75, 95), is fixed in a direction perpendicular to the side plate (12) .

6. An energy guiding chain according to one of the preceding claims 1 to 5, **characterised in that** one or preferably a plurality of lines extending outside the chain links (7) are accommodated in a flexible hose which is supported by the holding elements (46, 81).

7. An energy guiding chain according to one of claims 1 to 3 **characterised in that** provided in the receiving means (75, 95) is a centring projection (99) which cooperates with a through bore (84) in a foot portion (82) of the holding element (81) for central fixing at the level of the neutral fibre.

8. An energy guiding chain according to one of the preceding claims 1 to 6, **characterised in that** the receiving means (31, 75, 95) are provided at precisely one side of the energy guiding chain (1).

9. A side plate (12) for an energy guiding chain, wherein the side plate (12) defines two respective pivot axes about which two adjacent side plates (12) are pivotable relative to each other, the pivot axes being spaced apart in a longitudinal direction of the side plate (12) and extending transversely relative to this longitudinal direction, **characterised in that** a receiving means (75, 95) in form of an indentation (75, 95) integral with the body (71, 91) of the side plate (12) is provided at the outside surface of the side plate (12) in the central region, between two respective pivot axes, into which receiving means (75, 95) a holding element (81) can be inserted along a plane extending parallel to the side plate (12), wherein the receiving means (75, 95) is provided centrally on the side plate (12) with respect to a direction which runs transversely to the longitudinal direction and transversely to the pivot axes, and wherein in addition at least one further line, in particular a corrugated hose, can be fixed by means of the holding element (81).

10. A side plate according to claim 9 **characterised in that**
- the receiving means (75, 95) is configured in the form of an indentation (75, 95) and the inside surfaces of the longitudinal sides of the indentations (75, 95) are profiled in such a way that a holding element (81) with a corresponding counterpart profile, that is inserted into the indentation (75, 95), can be fixed in a direction perpendicular to the side plate (12); and/or
- the receiving means (75, 95) is integrally formed at the side plate (12).

11. A side plate (12) according to claim 9 **characterised in that** the receiving means (75, 95) is a rectangular indentation (75, 95) in the side plate (12) which is oriented with its longer side transversely relative to the longitudinal direction of the energy guiding chain (1).

12. A side plate (12) according to one of claims 9 to 11 **characterised in that** provided in the indentation (95) is a centring projection (99) which cooperates with a through bore (84) in a foot portion (82) of the holding element (81) for central fixing at the level of the neutral fibre.

13. A side plate (12) according to one of claims 9 to 12 **characterised in that** the indentation (75, 95) is open towards one side in the transverse direction relative to the longitudinal direction of the energy guiding chain (1).

14. An energy guiding chain (1) according to one of claims 1 to 8 or a side plate (12) according to one of claims 9 to 13 **characterised in that** a holding element (46, 81) for a corrugated hose is fixed in the receiving means (31, 75, 95), in order to fix a corrugated hose on the energy guiding chain (1).

## Revendications

1. Chaîne de guidage d'énergie (1) pour guider des lignes telles que des câbles, des tuyaux ou similaires, comprenant une pluralité de maillons de chaîne (7) interconnectés de manière articulée, dont au moins une partie comporte des pièces latérales (11, 12) mutuellement parallèles et des entretoise transversales (13) qui connectent les pièces latérales, les maillons de chaîne (7) adjacents pouvant pivoter autour d'un axe de pivotement respectif qui s'étend dans une direction transversale par rapport à la direction longitudinale de la chaîne de guidage d'énergie (1), la pluralité de lignes guidées s'étendant longitudinalement à l'intérieur des maillons de chaîne (7), tandis qu'au moins une autre ligne est disposée à l'extérieur des maillons de chaîne (7) et est supportée par des éléments de retenue (46, 81) prévus sur la chaîne de guidage d'énergie (1), **caractérisé en ce que** sur au moins un côté de la chaîne de guidage d'énergie (1) sur les surfaces extérieures d'au moins une partie des pièces latérales (12) et dans la région située entre deux axes de pivotement, des moyens de réception (31, 75, 95) sont prévus, dans lesquels les éléments de retenue (46, 81) pour la au moins une autre ligne peuvent être insérés le long d'un plan s'étendant parallèlement à la pièce latérale (12), les moyens de réception (31, 75, 95) étant prévus au centre, par rapport à une direction qui est perpendiculaire à la direction longitudinale et perpendiculaire aux axes de pivotement de la pièce latérale (12) concernée.

2. Chaîne de guidage d'énergie (1) selon la revendication 1, **caractérisée en ce que** chacun des moyens de réception (75, 95) est solidaire de la pièce latérale (12), de préférence formé de manière solidaire sur le côté extérieur de la pièce latérale (12).

3. Chaîne de guidage d'énergie (1) selon la revendication 2, **caractérisée en ce que** la chaîne de guidage d'énergie (1) présente des pièces latérales internes (11) et des pièces latérales externes (12) qui s'alternent, les moyens de réception (75, 95) étant intégrés à au moins certaines des pièces latérales externes (12).

4. Chaîne de guidage d'énergie selon l'une des revendications 1, 2 ou 3, en particulier selon la revendication 2, **caractérisée en ce que** les moyens de réception (31, 75, 95) sont des logements rectangulaires (31, 75, 95), en particulier dans les pièces latérales (12), qui sont orientés avec leur côté long transversalement à la direction longitudinale de la chaîne (1) et qui sont ouverts d'un côté dans cette direction.

5. Chaîne de guidage d'énergie selon la revendication 4, **caractérisée en ce que** les surfaces intérieures des côtés longs des logements (31, 75, 95) sont profilées de telle manière qu'un élément de retenue (46, 81) ayant un contre-profil correspondant, qui est monté dans le logement (31, 75, 95), soit fixé par rapport à une direction perpendiculaire à la pièce latérale (12).

6. Chaîne de guidage d'énergie selon l'une des revendications précédentes 1 à 5, **caractérisée en ce qu'**une ou de préférence plusieurs lignes qui s'étendent à l'extérieur des maillons de chaîne (7) sont logées dans un tube flexible qui est supporté par les éléments de retenue (46, 81).

7. Chaîne de guidage d'énergie selon l'une des revendications 1 à 3, **caractérisée en ce qu'**il est prévu dans le moyen de réception (75, 95) une saillie de centrage (99) qui coopère avec un trou traversant (84) dans une partie inférieure (82) de l'élément de retenue (81), pour une fixation centrale au niveau de la fibre neutre.

8. Chaîne de guidage d'énergie selon l'une des revendications 1 à 6 précédentes, **caractérisée en ce que** les moyens de réception (31, 75, 95) sont prévus sur un seul côté de la chaîne de guidage d'énergie (1).

9. Pièce latérale (12) pour une chaîne de guidage d'énergie, la pièce latérale (12) définissant deux axes de pivotement respectifs autour desquels deux pièces latérales adjacentes (12) peuvent pivoter l'une par rapport à l'autre, les axes de pivotement étant espacés dans une direction longitudinale de la pièce latérale (12) et s'étendant transversalement à cette direction longitudinale, **caractérisée en ce qu'**un moyen de réception (75, 95) sous forme d'un logement (75, 95) est formé d'une seule pièce avec le corps (71, 91) de la pièce latérale (12) et est disposé sur la surface extérieure de la pièce latérale (12) dans la zone centrale, entre les deux axes de pivotement respectifs, dans lequel un élément de retenue (81) peut être inséré le long d'un plan s'étendant parallèlement à la pièce latérale (12), le moyen de réception (75, 95) étant prévu de manière centrée sur la pièce latérale (12) par rapport à une direction qui est perpendiculaire à la direction longitudinale et perpendiculaire aux axes de pivotement, et dans laquelle, moyennant l'élément de retenue (81), au moins une autre ligne supplémentaire, notamment un tuyau ondulé, peut être fixée.

10. Pièce latérale selon la revendication 9, **caractérisée en ce que**
- le moyen de réception (75, 95) se présente sous la forme d'un logement (75, 95) et les surfaces intérieures des côtés longitudinaux du logement (75, 95) sont profilées de telle manière qu'un élément de retenue (81) avec un contre-profil correspondant, qui est inséré dans le logement (75, 95), puisse être fixé par rapport à une direction perpendiculaire à la pièce latérale (12) ; et/ou
- le moyen de réception (75, 95) est formé de manière solidaire sur la pièce latérale (12).

11. Pièce latérale (12) selon la revendication 9, **caractérisée en ce que** le moyen de réception (75, 95) est un logement rectangulaire (75, 95) dans la pièce latérale (12) qui est orienté avec son côté long transversalement à la direction longitudinale de la chaîne (1) de guidage d'énergie.

12. Pièce latérale (12) selon l'une des revendications 9 à 11, **caractérisée en ce qu'**il est prévu dans le logement (95) une saillie de centrage (99) qui coopère avec un trou traversant (84) dans une partie inférieure (82) de l'élément de retenue (81), pour une fixation centrale au niveau de la fibre neutre.

13. Pièce latérale (12) selon l'une des revendications 9 à 12, **caractérisée en ce que** le logement (75, 95) est ouvert vers un côté dans la direction transversale par rapport à la direction longitudinale de la chaîne (1) de guidage d'énergie.

14. Chaîne de guidage d'énergie (1) selon l'une des revendications 1 à 8 ou pièce latérale (12) selon l'une des revendications 9 à 13, **caractérisée en ce qu'**un élément de retenue (46, 81) pour un tuyau ondulé est fixé dans chaque moyen de fixation (31, 75, 95), pour fixer un tuyau ondulé sur la chaîne de guidage d'énergie (1).
